# EUROPEAN PATENT SPECIFICATION

(11) **EP 3 653 853 B1**
(45) Date of publication and mention of the grant of the patent: **24.03.2021**
(21) Application number: 19205303.1
(22) Date of filing: 25.10.2019
(51) Int. Cl.: F01N 3/20, F01N 11/00

(54) **NOX SLIP DETECTION**
NOX-SCHLUPFERKENNUNG
DÉTECTION DE FUITES DE NOX

(30) Priority: 15.11.2018 GB 201818633
(43) Date of publication of application: 20.05.2020
(73) Proprietor: AGCO International GmbH, 8212 Neuhausen am Rheinfall (CH)
(72) Inventor: WIHERSAARI, Hugo, Kenilworth CV8 2TQ (GB); HEIKKILA, Juha, Kenilworth CV8 2TQ (GB); PESOLA, Mikko, Kenilworth CV8 2TQ (GB)
(74) Representative: AGCO Intellectual Property Department

(56) References cited:
- EP-A1- 2 226 482
- EP-A1- 2 439 386
- WO-A1-2011/075015
- WO-A1-2015/095332
- US-A1- 2011 005 203
- US-A1- 2011 138 779

## Description

### FIELD OF THE INVENTION

The present invention relates to a method of determining the ratio of NH₃ to NOx in exhaust gases of an internal combustion engine.

### TECHNICAL BACKGROUND

There is a rising demand for cleaner and more efficient internal combustion engines, especially diesel engines. Diesel engines output particulate matter as well as nitrogen oxides from the exhaust systems.

The exhaust systems of working vehicles such as tractors often include diesel oxidation catalyst (DOC), diesel particulate filter (DPF) for PM treatment, SCR and downstream ammonia oxidation catalyst. A urea, also known as diesel emission fluid (DEF) is often used to dose exhaust gases, and then a chemical reaction in the catalysts causes the decomposition of NOx, NH3 (ammonia) and water, in reaction with catalytic coatings in a catalyst convert NOx into Nitrogen and water. Such exhaust systems and associated control methods are for example disclosed in the documents US2011/138779A1 or WO2011/075015A1.

The correlation between the urea dose and NOx reduction efficiency, can be generally interpreted as that the larger the dose of urea delivered to exhaust gas, the greater the reduction in NOx that is released to the atmosphere.

However, under varying engine conditions unutilized NH₃ can pass through the catalyst. As such, NH₃ variation occurs and detection of this slip is required as part of the system control strategy. This allows the urea to be correctly dosed for the engine operating conditions.

It is an object of the present invention to provide a method for detecting NH₃ slip using NOx sensors.

### SUMMARY OF THE INVENTION

Accordingly, there is provided a method of determining relative ratio of NOx to NH₃ in exhaust gases, the method comprising the steps of: a) Providing an exhaust system for an agricultural vehicle, the exhaust system comprising: an upstream NOx Sensor; a downstream NOx sensor; a first catalyst; an urea injector; and an exhaust control unit; b) Measuring a first NOx level at the upstream NOx sensor; c) Administering a first predetermined dose of NH₃ to the exhaust system; d) Measuring a second NOx level at the downstream NOx sensor; e) Administering a second predetermined dose of NH₃ to the exhaust system; f) Measuring a third NOx level at the downstream NOx sensor; g) Calculating the difference between the second NOx level and the third NOx level; h) Comparing the difference to a lookup table to determine the relative ratio of NH₃ and NOx.

Advantageously, the second predetermined dose of NH₃ may be larger than the first predetermined dose of NH₃. Using a larger dose makes the relative differences of the second and third dose levels easier to detect since the normal dosage levels are much smaller, this means less accurate sensors may be used which are generally cheaper than those that are more accurate.

Advantageously, the exhaust system may further comprise a second catalyst. Including a second catalyst helps to further reduce NOx levels and therefore the chemical efficiency of the exhaust system.

Advantageously, the first catalyst may be a selective catalytic reduction catalyst. In alternative embodiments the first catalyst is a ammonia oxidation catalyst.

Advantageously, the exhaust system may further comprise a temperature sensor. The inclusion of a temperature sensor means that the temperature of the exhaust gases is known and thus further improves the accuracy of estimations and predicted chemical reactions.

Advantageously, the exhaust system may further comprise a diesel particulate filter. Including a diesel particulate helps reduce particulate matter that passes to the atmosphere from the internal combustion engine thereby reducing pollutants from the exhaust system.

Advantageously, an agricultural vehicle may include an exhaust system configured to carry out the method. An agricultural vehicle including the system would be more efficient and have reduced pollutant output from the exhaust system at a lower cost than traditional known methods, i.e. Using a plurality of NH₃ sensors.

### DETAILED DESCRIPTION OF THE INVENTION

Embodiments of the invention will now be described, by way of example only, with reference to the accompanying drawings, in which:

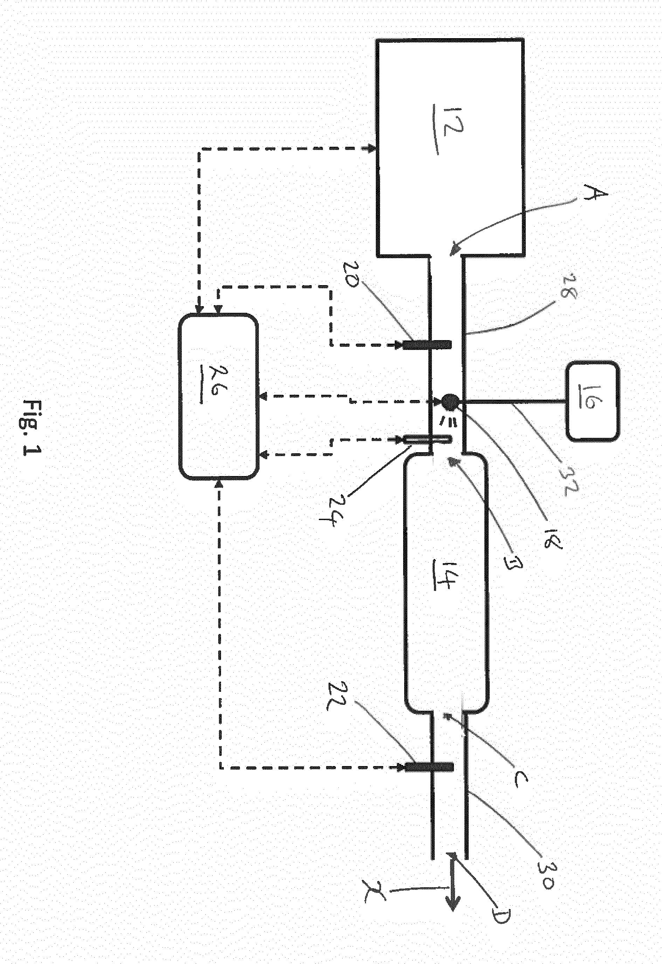

Fig. 1 is a schematic of an exhaust system configured to carry out the method according to the invention;

The drawings are provided by way of reference only, and will be acknowledged as not necessarily to scale.

With reference to Fig. 1, an exhaust system 10 is shown. The exhaust system 10 in this particular example is for an agriculture vehicle specifically a tractor (not shown). The arrow X indicates the direction of flow of gases through the exhaust system 10. The arrow X indicates a direction from upstream to downstream. It will be understood that throughout the following description the terms urea and NH3 such as anhydrous ammonia can be used interchangeably.

The exhaust system 10 comprises an internal combustion engine 12, a catalyst 14, a urea tank 16, a urea injector 18, an upstream NOx sensor 20, a downstream temperature sensor 22, a temperature sensor 24 and an engine control unit 26.

The internal combustion engine 12 in this example is specifically a diesel engine. The internal combustion engine 12 is configured to drive a transmission (not shown) of the tractor. The internal combustion engine 12 burns diesel fuel with atmospheric air and produces power and waste gases, the waste gases commonly being known as exhaust gases. The exhaust gases are rich in particulates and nitrous oxides.

The internal combustion engine 12 is in fluid communication with the catalyst 14 via conduit 28. The exhaust gases from the internal combustion engine 12 exit the internal combustion engine 12 at A pass via conduit 28 and enter the catalyst 14 at B. The conduit 28 between the internal combustion engine 12 and the catalyst 14 being formed by any suitable means for example a tube or conventional exhaust pipe constructed from for example mild steel or stainless steel and may be ceramic coated to provide better thermodynamic properties of the fluid connection.

The catalyst 14 is a selective catalytic reduction catalyst but may be of another catalyst type for example a diesel oxidation catalyst, an ammonia oxidation catalyst or a hybrid of different catalyst types.

Exhaust gases exit the catalyst 14 at C and enter a further conduit 30 known as a tail pipe or stack. The exhaust gases exit the conduit 30 at D. D being open to the atmosphere. The conduit 30 may be of any conventional design.

The urea tank 16 is provided as a reservoir for urea NH₃. The urea is used as a dosing agent for the exhaust system 10. The urea tank 16 is in fluid communication with the urea injector 18 via line 32.

The urea injector 18 is of suitable type and is provided to dose the exhaust gases in the exhaust system 10 with urea from the urea tank 16. In this example the urea injector 18 is provided in conduit 28 between A and B such that urea may be administered to the exhausts prior to them entering the catalyst 14.

The upstream NOx sensor (UNS) 20 is provided in the conduit 28 upstream of the urea injector 18 and is configured to provide readings/measurements of the NOx levels in the exhaust gases leaving the internal combustion engine 12.

The downstream NOx sensor (DNS) 22 is provided in the conduit 30 between C and D. The downstream NOx sensor is thus situated downstream of the catalyst 14, the urea injector 18 and the upstream NOx sensor 20. The downstream NOx sensor 22 is configured to measure the levels of NOx in exhaust gases in the conduit 30, i.e. downstream of the catalyst 14.

The temperature sensor (TS) 24 in this example is situated in the conduit 28 between A and B. In other examples the temperature sensor 24 may be omitted. The temperature sensor 24 is also situated between the urea injector 18 and the catalyst 14. The temperature sensor 24 is of any suitable type. The temperature sensor 24 is configured to measure the temperature of exhaust gases flowing in the conduit 28. That is, the temperature sensor is used to measure the temperature of exhaust gases as they exit the internal combustion engine 12 and before they enter the catalyst 14. In alternative embodiments it will be understood that the temperature sensor 24 may be upstream of the urea sensor 18 and/or further temperature sensors may be positioned throughout the exhaust system 10.

The engine control unit (ECU) 26 is provided as part of the exhaust system 10. However, it will be understood that the engine control unit 26 may be a main or auxiliary control unit provided as a standalone control unit on a vehicle or in data communication with a main/further control unit on the vehicle.

In this specific example, the engine control unit 26 is a main engine control unit for the vehicle and is configured to receive measurements/reading from vehicle sensors and send messages to various vehicle components and devices.

The engine control unit 26 is in data communication with each of the internal combustion engine 12, the urea injector 18, the upstream NOx sensor 20, the downstream NOx sensor 22 and the temperature sensor 24.

When the exhaust system 10 is in use exhaust gases containing NOx are expelled from the internal combustion engine 12 and are vented to the atmosphere at D.

To reduce the NOx content in the exhaust gases, the exhaust gases are dosed with urea (NH₃) at the urea injector 18 before entering the catalyst 14. This process is well known and is called Selective Catalytic Reduction.

During the SCR process, not all the urea which is dosed to the exhaust gases to react with the NOx is consumed.

As such, it is useful to know the ratio of NOx to NH₃ in the exhaust gases at D.

It would be possible to introduce a further sensor into the system in the conduit 30 between C and D and to use this sensor to measure NH₃ content in the exhaust gases at this stage, combined with the data measured from the downstream NOx sensor 22 it would then be possible to calculate the relative ratios of NOx and NH₃ in the exhaust gases.

Disadvantageously, the addition of a further sensor to measure the levels of NH₃ in the exhaust gases increases the system cost and complexity. As such it is preferential to utilise the sensors provided in the exhaust system 10 to calculate the relative ratios of NOx and NH₃ in the exhaust gases.

Thus to calculate the relative ratios of NOx and NH₃ in the exhaust gases, when the exhaust system 10 is in use, firstly a datum reading of NOx level is measured by the upstream NOx sensor 20 (first NOx level) and communicated to the ECU 26. The exhaust gases are next dosed with a known quantity i.e. first predetermined dose of NH3 at the urea injector 18 which is downstream of the downstream NOx sensor 20. The exhaust gases, now enriched with NH₃ pass into the catalyst 14. In the catalyst 14, in general terms, a chemical reduction reaction takes place whereby the NH₃ reacts with the NOx to convert some of the NOx to H2o and O2. However, not all the NOx and NH₃ react to create H20 and O2 and as such the exhaust gases exiting the catalyst 14 at C contain amongst other gases and particles, H2O, O2, NH₃ and NOx. The remaining level of NOx (second NOx level) is then measured by the downstream NOx sensor 22.

The preceding process occurs continually when the exhaust system is in use in a conventional manner when NOx reduction is required. The reaction generally produces stable results and conversion ratios.

To calculate the relative ratios of NH₃ the NOx and thereby check that the process is running correctly, the dose of NH₃ applied to the exhaust gases at the urea injector 18 is spiked to a second predetermined dose. That is, the dosing of urea is normally stable and relative to the measured NOx levels and is applied at a first predetermined level which is appropriate to the measured NOx levels at the upstream NOx sensor 20 and is set according to a predetermined dosing map. The second predetermined dose or spiked level is significantly higher than what would be required according to the aforementioned dosing map. The NOx levels are then measured in the exhaust gases in the conduit 30 by the downstream NOx sensor 22 (third NOx level).

The difference between the second and third NOx levels can then be computed by the engine control unit 26 and compared to a stored map to lookup the relative ratio of NH₃ and NOx. The stored map being constructed from results acquired from testing.

The temperature sensor 24 can be used to provide further data and more precisely estimate the reading since the temperature of the exhaust gases entering the catalyst 14 would be known.

In alternative embodiments a further catalyst may be provided in the exhaust system 10. In a specific embodiment this further catalyst is a DOC catalyst and is positioned upstream of the upstream NOx sensor 20.

Furthermore the exhaust system 10 may include a diesel particulate filter. This diesel particulate filter may for instance be situated downstream of the catalyst 14.

The invention is not limited to the embodiments or examples described herein, and may be modified or adapted without departing from the scope of the present invention as defined in the appended claims.

## Claims

1. A method of determining relative ratio of NOx to NH₃ in exhaust gases, the method comprising the steps of:
a) Providing an exhaust system for an agricultural vehicle, the exhaust system comprising:
an upstream NOx sensor (20);
a downstream NOx sensor (22);
a first catalyst (14);
an urea injector (18); and
an exhaust control unit (26);
b) Measuring a first NOx level at the upstream NOx sensor;
c) Administering a first predetermined dose of NH₃ to the exhaust system;
d) Measuring a second NOx level at the downstream NOx sensor;
e) Administering a second predetermined dose of NH₃ to the exhaust system;
f) Measuring a third NOx level at the downstream NOx sensor;
g) Calculating the difference between the second NOx level and the third NOx level;
h) Comparing the difference to a lookup table to determine the relative ratio of NH₃ and NOx.

2. The method according to claim 1 wherein the second predetermined dose of NH₃ is a larger than the first predetermined dose of NH₃.

3. The method according to claim 1 or 2 wherein the exhaust system further comprises a second catalyst.

4. The method according to any preceding claim wherein the first catalyst is a selective catalytic reduction catalyst.

5. The method according to claims 3 to 4 wherein the first catalyst is an ammonia oxidation catalyst.

6. The method according to any preceding claim wherein the exhaust system further comprises a temperature sensor.

7. The method according to any preceding claim wherein the exhaust system further comprises a diesel particulate filter.

8. An agricultural vehicle including an exhaust system configured to carry out the method of according to any preceding claim.

## Patentansprüche

1. Verfahren zum Bestimmen des Relativverhältnisses von NOx und NH₃ in Abgasen, wobei das Verfahren die folgenden Schritte aufweist:
a) Bereitstellen eines Abgassystems für ein landwirtschaftliches Fahrzeug, wobei das Abgassystem das Folgende aufweist:
einen vorgeschalteten NOx-Sensor (20);
einen nachgeschalteten NOx-Sensor (22);
einen ersten Katalysator (14);
einen Harnstoffeinspritzer (18); und
eine Abgasreglereinheit (26);
b) Messen eines ersten NOx-Niveaus an dem vorgeschalteten NOx-Sensor;
c) Zuführen einer ersten vorbestimmten Dosis von NH₃ zu dem Abgassystem;
d) Messen eines zweiten NOx-Niveaus an dem nachgeschalteten NOx-Sensor;
e) Zuführen einer zweiten vorbestimmten Dosis von NH₃ zu dem Abgassystem;
f) Messen eines Dritten NOx-Niveaus an dem nachgeschalteten NOx-Sensor;
g) Berechnen der Differenz zwischen dem zweiten NOx-Niveau und dem dritten NOx-Niveau;
h) Vergleichen der Differenz mit einer Nachschlagetabelle zum Bestimmen des Relativverhältnisses von NOx und NH₃.

2. Verfahren nach Anspruch 1, wobei die zweite vorbestimmte Dosis von NH₃ größer als die erste vorbestimmte Dosis von NH₃ ist.

3. Verfahren nach Anspruch 1 oder 2, wobei das Abgassystem weiterhin einen zweiten Katalysator aufweist.

4. Verfahren nach mindestens einem der vorhergehenden Ansprüche, wobei der erste Katalysator ein SCR-Katalysator ("selective catalytic reduction"; selektive katalytische Reduktion) ist.

5. Verfahren nach Anspruch 3 oder 4, wobei der erste Katalysator ein Ammoniakoxidationskatalysator ist.

6. Verfahren nach mindestens einem der vorhergehenden Ansprüche, wobei das Abgassystem weiterhin einen Temperatursensor aufweist.

7. Verfahren nach mindestens einem der vorhergehenden Ansprüche, wobei das Abgassystem weiterhin einen Dieselpartikelfilter aufweist.

8. Landwirtschaftliches Fahrzeug mit einem Abgassystem, das zum Ausführen des Verfahrens nach mindestens einem der vorhergehenden Ansprüche konfiguriert ist.

## Revendications

1. Procédé de détermination d'un rapport relatif de NOx sur NH₃ dans des gaz d'échappement, le procédé comprenant les étapes suivantes :
a) la fourniture d'un système d'échappement pour un véhicule agricole, le système d'échappement comprenant :
un capteur de NOx amont (20) ;
un capteur de NOx aval (22) ;
un premier catalyseur (14) ;
un injecteur d'urée (18) ; et
une unité de contrôle d'échappement (26) ;
b) la mesure d'un premier niveau de NOx au niveau du capteur de NOx amont ;
c) l'administration d'une première dose prédéterminée de NH₃ au système d'échappement ;
d) la mesure d'un deuxième niveau de NOx au niveau du capteur de NOx aval ;
e) l'administration d'une deuxième dose prédéterminée de NH₃ au système d'échappement ;
f) la mesure d'un troisième niveau de NOx au niveau du capteur de NOx aval ;
g) le calcul de la différence entre le deuxième niveau de NOx et le troisième niveau de NOx ;
h) la comparaison de la différence à une table de consultation pour déterminer le rapport relatif de NH₃ et NOx.

2. Procédé selon la revendication 1 dans lequel la deuxième dose prédéterminée de NH₃ est supérieure à la première dose prédéterminée de NH₃.

3. Procédé selon la revendication 1 ou 2 dans lequel le système d'échappement comprend en outre un deuxième catalyseur.

4. Procédé selon l'une quelconque des revendications précédentes dans lequel le premier catalyseur est un catalyseur de réduction catalytique sélective.

5. Procédé selon les revendications 3 et 4 dans lequel le premier catalyseur est un catalyseur d'oxydation de l'ammoniac.

6. Procédé selon l'une quelconque des revendications précédentes dans lequel le système d'échappement comprend en outre un capteur de température.

7. Procédé selon l'une quelconque des revendications précédentes dans lequel le système d'échappement comprend en outre un filtre à particules diesel.

8. Véhicule agricole comportant un système d'échappement configuré pour réaliser le procédé de l'une quelconque des revendications précédentes.
